Europäisches Patentamt

European Patent Office

Office européen des brevets

(19)

(11) Numéro de publication: **0 031 746**
**B1**

(12) **FASCICULE DE BREVET EUROPEEN**

(45) Date de publication du fascicule du brevet: **18.07.84**

(51) Int. Cl.³: **H 04 L 27/14**

(21) Numéro de dépôt: **80401765.5**

(22) Date de dépôt: **09.12.80**

(54) Circuit pour la démodulation d'un signal modulé par une information numérique et récepteur comportant un tel circuit.

(30) Priorité: **27.12.79 FR 7931804**

(43) Date de publication de la demande:
**08.07.81 Bulletin 81/27**

(45) Mention de la délivrance du brevet:
**18.07.84 Bulletin 84/29**

(84) Etats contractants désignés:
**AT BE CH DE GB IT LI LU NL SE**

(56) Documents cités:
**CH - A - 244 477**
**FR - A - 563 899**
**FR - A - 1 259 477**
**FR - A - 2 302 640**
**GB - A - 1 022 598**

**ELECTRONICS AND COMMUNICATIONS IN
JAPAN, volume 58-A, no. 11, novembre 1975
WASHINGTON (US) F. MANO "Study of a
carrier-regenerating circuit for VSB
demodulation", pages 18-24**

(73) Titulaire: **THOMSON-CSF**
**173, Boulevard Haussmann**
**F-75379 Paris Cedex 08 (FR)**

(72) Inventeur: **Dehaene, Jean-Pierre**
**THOMSON-CSF SCPI 173, bld Haussmann**
**F-75360 Paris Cedex 08 (FR)**

(74) Mandataire: **Courtellemont, Alain et al,**
**THOMSON-CSF SCPI 173, Bld Haussmann**
**F-75379 Paris Cedex 08 (FR)**

**Description**

La présente invention se rapporte à un circuit pour la démodulation d'un signal modulé provenant de la modulation en fréquence d'une porteuse par une information numérique et présentant une raie à la fréquence porteuse, ledit circuit comportant un circuit additionneur recevant sur une première entrée le signal modulé.

De tels circuits sont connus qui comportent une boucle à asservissement de phase qui fournit l'information modulante (phase lock loop dans la littérature anglo-saxonne). Ces boucles sont constituées d'un comparateur de phase qui reçoit l'information à démoduler sur l'une de ses entrées et dont la sortie est reliée, à travers un filtre passe-bas et un amplificateur, à l'entrée de commande d'un circuit oscillateur variable; la sortie de l'oscillateur est reliée à l'autre entrée du comparateur de phase et le signal démodulé est receuilli à la sortie de l'amplificateur. De telles boucles doivent être à large bande étant donné qu'elles doivent permettre de passer toute la bande de fréquences de l'information modulante; ces boucles sont donc difficiles à réaliser et, de ce fait, chères.

Par ailleurs le document FR—A— 2 302 640, décrit un circuit pour la démodulation d'un signal modulé provenant de la modulation en fréquence d'une porteuse par une information numérique et présentant une raie à la fréquence porteuse; ce circuit de démodulation comporte un circuit additionneur recevant, sur une première entrée, le signal modulé et, sur une seconde entrée un signal à fréquence fixe produit localement. Dans ce circuit de démodulation il y a addition au signal modulé, de fréquence $F_0$ ou $F_1$, du signal à fréquence fixe, de fréquence

$$\frac{F_0 + F_1}{2};$$

ce signal à fréquence fixe, du fait qu'il est produit par un simple oscillateur local, est incohérent par rapport au signal reçu, c'est-à-dire que sa phase n'est pas liée à la phase de la porteuse reçue. La détection de l'information se fait, au moyen de deux filtres accordés respectivement sur les fréquences $F_0$ et $F_1$, par un démodulateur numérique; or un tel démodulateur est inutilisable pour la démodulation d'informations analogiques car il n'est pas linéaire en fréquence. La présente invention a pour but d'éviter les inconvénients précités et de permettre l'utilisation de certains récepteurs de signaux analogiques pour la réception, dans de bonnes conditions, de signaux modulés provenant de la modulation en fréquence d'une porteuse par une information numérique et présentant une raie à la fréquence porteuse.

Ceci est obtenu en transformant le signal à démoduler de manière à pouvoir réaliser la démodulation au moyen d'un circuit de démodulation linéaire en fréquence du genre des démodulateurs à discriminateur utilisés de manière courante dans les faisceaux hertziens analogiques; ainsi le circuit selon l'invention permet l'utilisation d'un matériel classique de faisceaux hertziens analogiques pour recevoir temporairement des informations numériques.

Selon l'invention un circuit du type indiqué au début de ce texte est caractérisé en ce qu'il comporte également des moyens de récupération de porteuse, recevant le signal modulé et ayant une sortie couplée à une seconde entrée du circuit additionneur et en ce que la sortie du circuit additionneur est couplée à l'entrée d'un démodulateur linéaire en fréquence au moins dans la bande de fréquence nécessaire à la transmission de la porteuse modulée.

La présente invention sera mieux comprise et d'autres caractéristiques apparaîtront à l'aide de la description ci-après et des revendications s'y rapportant qui représentent:

— la figure 1 un circuit selon l'invention,
— les figures 2 à 6 des graphiques relatifs à des signaux du circuit selon la figure 1.

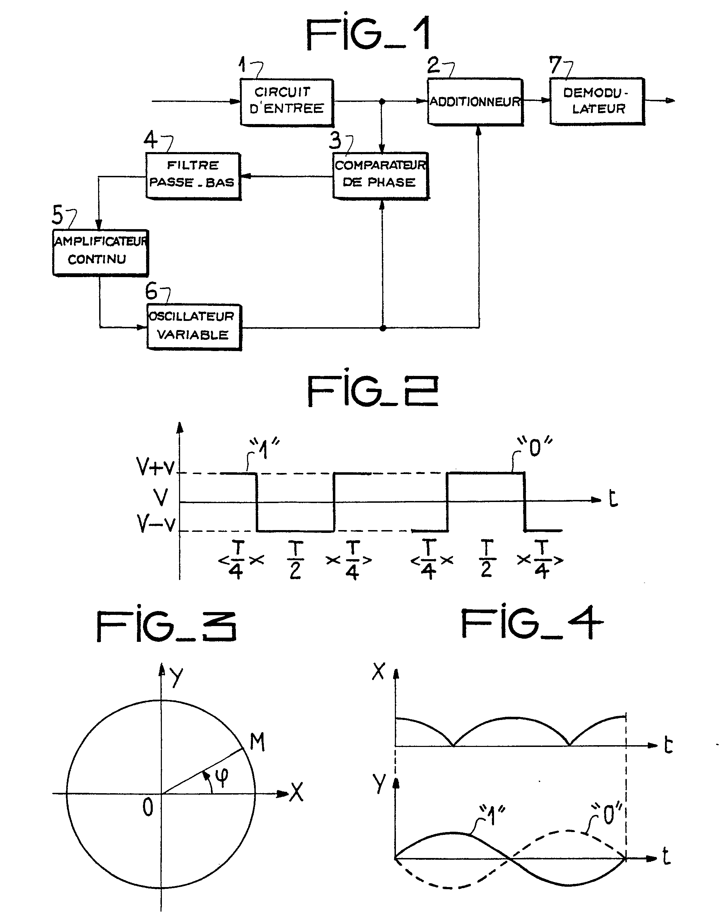

La figure 1 représente un circuit d'entrée, 1, qui reçoit des signaux à haute fréquence, porteurs d'information. Ce circuit d'entrée qui comporte un dispositif de transposition de fréquence, délivre des signaux à fréquence intermédiaire.

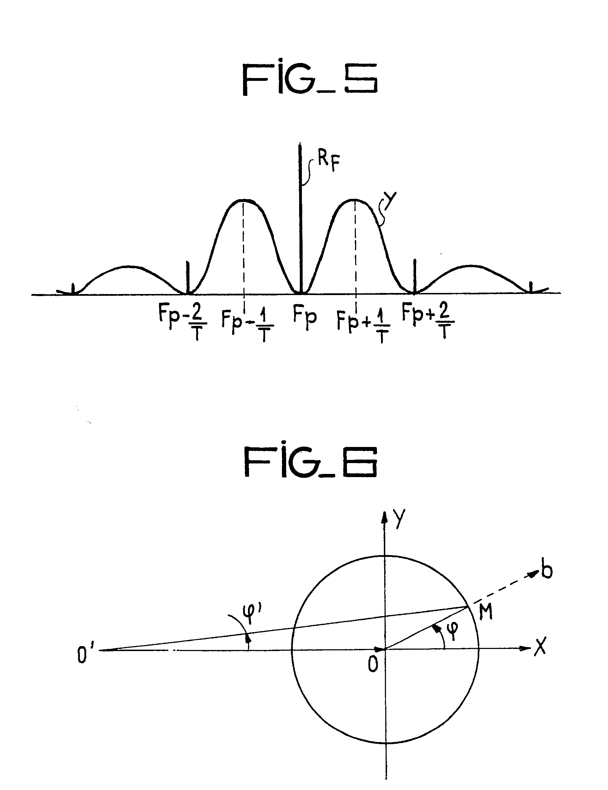

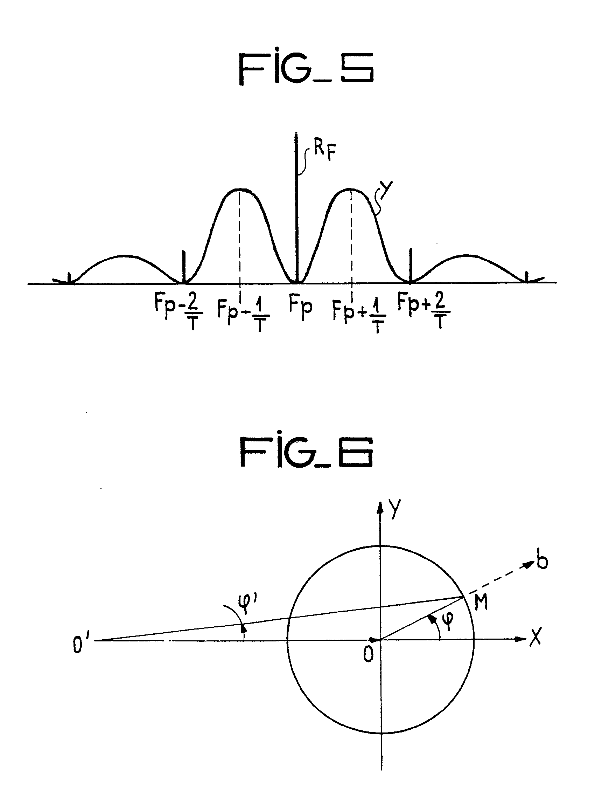

Dans l'exemple de réalisation selon la figure 1 les signaux reçus proviennent de la modulation de fréquence d'une porteuse à la fréquence F par des signaux binaires représentant l'information à transmettre. Comme le montre la figure 2 ces signaux binaires sont des signaux rectangulaires de durée

$$T = \frac{1}{f};$$

la valeur "1" logique est représentée par un signal d'amplitude V+v pendant les premier et dernier quarts de la durée T, et d'amplitude V—v pendant les deuxième et troisième quarts de la durée T; la valeur "0" logique est représentée par un signal d'amplitude V—v pendant les premier et dernier quarts de la durée T et d'amplitude V+v pendant les deuxième et troisième quarts de la durée T.

Par modulation de fréquence ces signaux d'amplitude V+v et V—v sont transformés respectivement en signaux à la fréquence F+dF et F—dF. La valeur dF est choisie égale à f de telle sorte que, pendant les temps

$$dT = \frac{T}{4}$$

où les éléments binaires "1" et "0" de la figure 2 présentent une amplitude constante, la variation de phase, à laquelle est équivalent le saut de fréquence correspondant, entraîne un écart de phase de

$$\frac{\pi}{2}$$

par rapport au signal non modulé c'est-à-dire à la porteuse à la fréquence F.

La figure 3 est une représentation trigonométrique de la variation de la phase $\varphi$ de la porteuse modulée représentée par un vecteur OM dont l'extrémité M parcourt, à une vitesse constante, de

$$-\frac{\pi}{2}$$

à

$$+\frac{\pi}{2},$$

un cercle trigonometrique d'axes OX et OY.

La figure 4, qui se déduit facilement de la figure 3, est une représentation de la variation de l'abscisse OX et de l'ordonnée OY du point M représentatif de la phase du signal modulé. Que l'élément binaire modulant soit un "1" ou un "0" la variation des abscisses est la même alors que la variation des ordonnées est différente: courbe repérée "1" relative à l'élément binaire "1" et courbe repérée "0" relative à l'élément binaire "0".

La figure 5 représente le spectre du signal modulé. Ce spectre est composé des raies relatives à la composante OX, situées aux fréquences F±nf (avec n=0, 2, 4...) et des raies relatives à la composante OY dont l'enveloppe a été repérée sur la figure 4 par la lettre Y. L'amplitude de cette enveloppe s'annule pour F±nf c'est-à-dire pour les raies relatives à la composante OX.

Il est donc possible de récupérer la raie $R_F$ à la fréquence F. Le signal ainsi obtenu, peut, après amplification, être additionné au signal reçu, en phase avec la porteuse de ce signal reçu; la figure 6 montre cette addition dans une représentation trigonométrique. Sur la figure 6 a été également représenté le vecteur bruit représentatif du bruit qui accompagne le signal reçu.

La raie $R_F$ amplifiée (vecteur O'O, figure 6) additionnée au signal à fréquence intermédiaire (vecteur OM, figure 6), c'est-à-dire à la porteuse modulée reçue, donne un nouveau signal (vecteur O'M, figure 6) où la modulation de phase $\varphi'$ se trouve comprimée par rapport à celle, $\varphi$, de la porteuse modulée reçue.

Sur la figure 6 le bruit accompagnant le signal utile (vecteur OM) a été représenté par un vecteur Mb; ce vecteur d'amplitude et de direction aléatoires rend assez bien compte de la réalité physique du bruit. Il est à remarquer que la probabilité que le vecteur bruit, au cours du temps, ait la trajectoire de son extrémité b qui entoure l'origine O' du nouveau signal, est beaucoup moins grande que la probabilité qu'elle entoure l'origine O de la porteuse modulée reçue. Il est ainsi possible d'améliorer le seuil d'un discriminateur en lui fournissant non pas directement la porteuse modulée reçue mais ce signal après réinjection d'un signal à la fréquence porteuse. Cette façon de procéder est mise en pratique dans le circuit selon la figure 1 où la porteuse modulée reçue est, comme il a été vu plus avant, fournie par le circuit d'entrée 1. Ce signal est appliqué d'une part sur la première entrée d'un additionneur 2 et d'autre part à un circuit de récupération de porteuse composé des éléments ci-après:

— un comparateur de phase 3 qui reçoit sur sa première entrée la porteuse modulée fournie par le circuit d'entrée 1,
— un filtre passe-bas, 4, branché à la sortie du comparateur de phase 3 pour débarrasser de sa composante alternative le signal de sortie du comparateur,
— un amplificateur continu, 5, à gain réglable pour amplifier le signal de sortie du filtre 4,
— et un oscillateur variable 6 dont l'entrée de commande reçoit le signal de sortie de l'amplificateur 5 et dont la sortie est connectée à la seconde entrée du comparateur de phase 3 et à la seconde entrée de l'additionneur 2.

Le signal de sortie de l'additionneur correspond au signal avec porteuse réinjectée dont il a été question à l'occasion de la description de la figure 6. Ce signal est appliqué à l'entrée d'un démodulateur linéaire en fréquence, 7, du genre démodulateur à discriminateur, dont le seuil de discrimination se trouve ainsi artificiellement amélioré pour le signal modulé fourni par le circuit d'entrée 1.

Il est à noter que cette façon d'améliorer le seuil de discrimination n'est valable que pour une transmission numérique car la compression de phase ainsi effectuée ne modifie pas la phase de manière linéaire; le calcul montre et l'expérience confirme qu'il est néan-moins possible de se contenter, derrière le démodulateur 7, des circuits de filtrage qui auraient été utilisés sans le dispositif de réinjection de porteuse.

L'invention n'est pas limitée au cas de l'exemple décrit, c'est ainsi que le circuit de récupération de porteuse selon la figure 1 (éléments 3 à 6) peut être remplacé par un filtre passe-bande centré sur la fréquence porteuse du signal modulé reçu.

D'une façon très générale le circuit selon l'invention peut être utilisé pour la démodulation de tout signal modulé par une information numérique et dont le spectre présente une raie à la fréquence porteuse.

Le circuit selon l'invention est plus spécialement destiné à équiper un récepteur radioélectrique d'une liaison par faisceaux hertziens analogiques lors de l'utilisation de cette liaison pour la transmission temporaire d'informations numériques; un simple dispositif de commutation permet alors de relier la sortie du circuit d'entrée 1 de la figure 1 à l'entrée du démodulateur 7, soit comme indiqué sur la figure 1, soit par une simple connexion.

**Revendications**

1. Circuit pour la démodulation d'un signal modulé provenant de la modulation en fréquence d'une porteuse par une information numérique et présentant une raie à la fréquence porteuse, comportant un circuit additionneur (2) recevant sur une première entrée le signal modulé, caractérisé en ce qu'il comporte également des moyens de récupération de porteuse (3, 4, 5, 6), recevant le signal modulé et ayant une sortie couplée à une seconde entrée du circuit additionneur et en ce que la sortie du circuit additionneur est couplée à l'entrée d'un démodulateur (7) linéaire en fréquence au moins dans la bande de fréquences nécessaire à la transmission de la porteuse modulée.

2. Circuit pour la démodulation d'un signal selon la revendication 1, caractérisé en ce que les moyens de récupération de porteuse comportent, en série, un circuit de comparaison de phase (3) ayant une première entrée recevant le signal modulé, un filtre passe-bas (4), un amplificateur (5), un oscillateur variable (6) commandé par l'amplificateur et dont la sortie est couplée à la seconde entrée du circuit de comparaison de phase et à la sortie des moyens de récupération de porteuse.

3. Circuit pour la démodulation d'un signal, selon la revendication 1, caractérisé en ce que les moyens de récupération de porteuse comportent un filtre passe-bande dont la bande passante est centrée sur la fréquence porteuse et en ce que le filtre reçoit le signal modulé et a sa sortie couplée à la sortie des moyens de récupération de porteuse.

4. Récepteur radioélectrique caractérisé en ce qu'il comporte un circuit pour la démodulation d'un signal selon l'une quelconque des revendications précédentes.

**Patentansprüche**

1. Schaltung zur Demodulation eines modulierten Signals, das durch Frequenzmodulation einer Trägerschwingung durch eine digitale Information entsteht und eine Frequenzlinie bei der Trägerfrequenz aufweist, mit einer Addierschaltung (2), die an einem ersten Eingang das modulierte Signal empfängt, dadurch gekennzeichnet, daß sie ferner Mittel zur Wiedergewinnung der Trägerschwingung (3, 4, 5, 6) enthält, welche das modulierte Signal empfangen und einen Ausgang aufweisen, der an einen zweiten Eingang der Addierschaltung angekoppelt ist, und daß der Ausgang der Addierschaltung an den Eingang eines Demodulators (7) angekoppelt ist, der wenigstens in dem für die Übertragung der modulierten Trägerschwingung erforderlichen Frequenzband frequenzlinear ist.

2. Schaltung zur Demodulation eines Signals nach Anspruch 1, dadurch gekennzeichnet, daß die Mittel zur Wiedergewinnung der Trägerschwingung in Reihenschaltung eine Phasenkomparatorschaltung (3) mit einem ersten, das modulierte Signal empfangenden Eingang, ein Tiefpaßfilter (4), einen Verstärker (5) und einen variablen Oszillator (6) enthalten, der durch den Verstärker gesteuert wird und dessen Ausgang mit dem zweiten Eingang der Phasenkomparatorschaltung und mit dem Ausgang der Trägerschwingungs-Rückgewinnungsmittel verbunden ist.

3. Schaltung zur Demodulation eines Signals nach Anspruch 1, dadurch gekennzeichnet, daß die Trägerschwingungs-Rückgewinnungsmittel ein Bandpaßfilter enthalten, dessen Durchlaßband auf die Trägerfrequenz zentriert ist, und daß das Filter das modulierte Signal empfängt, während sein Ausgang an den Ausgang der Trägerschwinnungs-Rückgewinnungsmittel angeschlossen ist.

4. Funkempfänger, dadurch gekennzeichnet, daß er eine Schaltung zur Demodulation eines Signals nach einem der vorstehenden Ansprüche enthält.

**Claims**

1. Circuit for demodulation of a modulated signal resulting from the frequency modulation of a carrier by a digital information and presenting a line at the carrier frequency, comprising an adder circuit (2) receiving the modulated signal on a first input, characterized in that it further comprises carrier recovery means (3, 4, 5, 6) receiving the modulated signal and having an output coupled to a second input of the adder circuit, and in that the output of the adder circuit is coupled to the input of a demodulator (7) which is frequency linear at least within the frequency band required for the transmission of the modulated carrier.

2. Circuit for the demodulation of a signal according to claim 1, characterized in that the carrier recovery means comprise, in series, a phase comparator circuit (3) having a first input receiving the modulated signal, a low-pass filter (4), an amplifier (5) and a variable oscillator (6) controlled by an amplifier and the output of which is coupled to the second input of the phase comparator circuit and to the output of the carrier recovery means.

3. Circuit for the demodulation of a signal according to claim 1, characterized in that the carrier recovery means comprise a band-pass filter the pass band of which is centered on the carrier frequency, and in that the filter receives the modulated signal and has its output coupled to the output of the carrier recovery means.

4. Radioelectric receiver, characterized in that it comprises a circuit for the demodulation of a signal according to any of the preceding claims.

## FIG_1

CIRCUIT D'ENTREE — 1

ADDITIONNEUR — 2

DEMODU-LATEUR — 7

FILTRE PASSE - BAS — 4

COMPARATEUR DE PHASE — 3

AMPLIFICATEUR CONTINU — 5

OSCILLATEUR VARIABLE — 6

## FIG_2

## FIG_3

## FIG_4

# FIG_5

$$Fp-\frac{2}{T} \quad Fp-\frac{1}{T} \quad Fp \quad Fp+\frac{1}{T} \quad Fp+\frac{2}{T}$$

# FIG_6

## FIG_5

## FIG_6